Europäisches Patentamt

European Patent Office

Office européen des brevets

(19)

(11) Numéro de publication: **0 029 395**
**A2**

# DEMANDE DE BREVET EUROPEEN

(12)

(21) Numéro de dépôt: **80401653.3**

(22) Date de dépôt: **18.11.80**

(51) Int. Cl.³: **F 16 C 43/06**

(30) Priorité: **19.11.79 FR 7928766**

(43) Date de publication de la demande: **27.05.81**
**Bulletin 81/21**

(84) Etats contractants désignés: **BE CH DE GB IT LI**

(71) Demandeur: **SOCIETE INDUSTRIELLE DES PLASTIQUES DE L'ATLANTIQUE, 10, rue Georges Clémenceau, F-85000 La Roche-Sur-Yon (FR)**

(72) Inventeur: **Faisant, Gilles, 71, rue Gérard Philipe, F-85000 La Roche Sur Yon (FR)**

(74) Mandataire: **Phélip, Bruno et al, c/o Cabinet HARLé & LECHOPIEZ 21, rue de La Rochefoucauld, F-75009 Paris (FR)**

(54) **Procédé de fabrication et de montage d'un palier à roulement à rouleaux cylindriques, et palier obtenu par sa mise en oeuvre.**

(57) Le procédé concerne la fabrication et le montage des paliers à roulement équipés de rouleaux cylindriques.

Ce procédé consiste à positionner d'une façon rapide et précise les rouleaux 2 les uns par rapport aux autres sur une plaque support circulaire 6 en matière plastique comportant une fente d'élasticité ou fractionnée en plusieurs parties afin de permettre sa mise en place entre les épaulements de la bague intérieure 1 du roulement, le positionnement de la bague extérieure 3 par rapport au chemin de roulement des rouleaux étant assuré au moyen d'un bandage extérieur 4 en matière plastique équipé d'un ou de deux flasques latéraux 5 recouvrant la zone des rouleaux et constituant avec la bague intérieure ou l'arbre sur lequel le roulement est monté, une parfaite étanchéité aux poussières dudit roulement.

L'invention s'applique à la fabrication et au montage de tous types de paliers à roulement à rouleaux fonctionnant à faible ou moyenne vitesse sous des charges même élevées.

1

Procédé de fabrication et de montage d'un palier à roulement à rouleaux cylindriques, et palier obtenu par sa mise en oeuvre.

La présente invention concerne un procédé de fabrication et de montage d'un palier à roulement à rouleaux cylindriques ainsi que des paliers à roulement obtenus par mise en oeuvre de ce procédé.

Les roulements à billes ou à rouleaux de fabrication courante sont réalisés en acier spécial, l'usinage des pièces constitutives étant suivi par des opérations de rectification et de traitement thermique appropriées : l'ensemble de ces opérations délicates est coûteux. Une solution plus économique consiste à réaliser des roulements dont la bagues intérieure et extérieure et même éventuellement les billes et les rouleaux sont en une matière plastique présentant les caractéristiques exigées, à savoir une bonne résistance mécanique, une bonne résistance à l'abrasion, une bonne stabilité dimensionnelle ainsi qu'un faible coefficient de frottement avec ou sans lubrification. Cette solution a pour avantage de permettre une mise en place d'une façon jointive, des billes ou rouleaux entre les bagues intérieure et extérieure, en mettant à profit l'élasticité du matériau utilisé, permettant une déformation élastique de l'une ou des deux bagues, déformation jugulée après mise en place des billes ou rouleaux par emmanchement à force d'un axe ou moyeu métallique dans l'alésage de la bague intérieure ou par sertissage d'une virole métallique sur la bague extérieure. Cette solution a pour inconvénient de ne pouvoir convenir à des paliers soumis à des charges radiales importantes. Pour ces dernières, nécessité est d'utiliser les roulements en acier. Dans ceux-ci, la mise en place des billes ou rouleaux s'opère de deux façon selon que ces derniers sont jointifs ou non. Dans le premier cas, leur introduction s'effectue au travers d'une encoche ; dans le second cas, ils sont introduits entre les deux bagues intérieure et extérieure par excentration de celles-ci l'une par rapport à l'autre, le volume inoccupé

2 0029395

étant ensuite réparti selon des intervalles égaux alternant avec les billes ou les rouleaux à l'aide d'une cage métallique en tôle emboutie.

On connaît aussi l'utilisation d'une plaque de support de rouleaux, avant leur montage dans un palier. Ainsi, le brevet britannique n° 1 303 144 décrit un palier comprenant des rouleaux ayant une gorge et destinés à pénétrer dans une encoche d'une plaque de support de forme circulaire. Ces encoches comportent un alésage débouchant vers l'extérieur par l'intermédiaire d'un embrèvement en V. La plaque de support est en une seule pièce.

L'invention concerne un procédé permettant l'obtention d'un positionnement relatif rapide et précis des rouleaux les uns par rapport aux autres et leur montage autour du chemin de roulement d'une bague intérieure épaulée ou d'une gorge épaulée d'un arbre, ce montage permettant en outre une bonne étanchéité à la poussière et une bonne tenue aux sollicitations axiales.

Plus précisément, l'invention concerne un procédé de fabrication et de montage de paliers à rouleaux cylindriques pour charges radiales, ayant des rouleaux en acier traité, ce procédé comprenant la formation d'au moins une gorge circulaire dans chacun des rouleaux, la mise en place rapide et précise des rouleaux les uns par rapport aux autres par introduction de la gorge de chaque rouleau dans une encoche radiale d'une plaque support circulaire interrompue ou fractionnée en au moins deux parties sensiblement jointives, et le montage de la plaque portant les rouleaux dans un bandage extérieur ayant des flasques latéraux, rapportés ou non, assurant l'étanchéité aux poussières par rapport à une bague intérieure du palier ou à un arbre sur lequel le palier est monté.

Selon une caractéristique avantageuse, avant le montage de la plaque dans un bandage, le procédé comprend l'introduction des rouleaux portés par la plaque de support dans une gorge épaulée d'une bague intérieure ou d'un arbre, par écartement puis rapprochement de la plaque support in-

3  0029395

terrompue ou fractionnée.

L'invention concerne aussi un palier à rouleaux cylindriques obtenu par mise en oeuvre d'un procédé selon l'invention. Un tel palier comprend des rouleaux cylindriques en acier traité ayant chacun au moins une gorge circulaire, une plaque de support des rouleaux, formée d'une matière plastique semi-rigide et ayant des encoches radiales réparties à intervalles réguliers et dont le profil comprend un alésage de diamètre supérieur à celui de la gorge des rouleaux, de périmètre supérieur à un demi-cercle et débouchant à la périphérie externe de la plaque par l'intermédiaire d'un embrèvement en forme de V facilitant l'introduction du rouleau et son clipage dans ledit alésage, le passage à force dans l'étranglement séparant . l'alésage de l'embrèvement étant rendu possible par l'élasticité de la matière plastique de la plaque, et un bandage externe ayant des flasques latéraux, rapportés ou non, assurant l'étanchéité aux poussières par rapport à la bague intérieure du palier ou à un arbre sur lequel le palier est monté.

Il est avantageux que le palier comporte une bague intérieure ayant des épaulements destinés à retenir les rouleaux, et que la plaque de support des rouleaux soit sous forme d'une couronne monobloc comportant une fente radiale d'élasticité permettant la mise en place de la plaque entre les épaulements de la bague intérieure, par déformation élastique de la plaque.

Dans un autre mode de réalisation, le palier comporte une bague intérieure ayant des épaulements destinés à retenir les extrémités des rouleaux, et la plaque de support est formée d'au moins deux éléments articulés autour d'un axe au moins et permettant une ouverture suffisant à la mise en place de la plaque entre les épaulements de la bague intérieure.

Selon une caractéristique avantageuse, le palier comporte une bague extérieure et une bague intérieure, la bague extérieure étant logée dans un bandage de matière

4

0029395

plastique injectée, les pressions de contact exercées par la matière plastique sur la face externe de la bague extérieure, éventuellement accrues par collage, assurant une liaison parfaite des deux pièces, le bandage formant un flasque qui recouvre l'extrémité des rouleaux, au niveau de l'une des faces latérales du bandage, l'alésage du flasque correspondant, au jeu fonctionnel près, au diamètre externe de la bague intérieure ou de l'arbre sur lequel le palier est monté afin que le palier soit étanche aux poussières, l'autre face latérale du bandage ayant un logement circulaire destiné à loger, par clipage, collage ou soudage, un flasque rapporté dont l'alésage a un diamètre tel que le flasque assure l'étanchéité du palier aux poussières par coopération avec la bague intérieure ou l'arbre.

Dans un mode de réalisation avantageux, la bague extérieure est en acier, elle a des épaulements, et elle est formée en deux parties adjacentes à un plan radial sensiblement médian du roulement.

Dans un autre mode de réalisation, le bandage externe comporte, dans chaque flanc, un logement circulaire destiné à la fixation par clipage, collage ou soudage, d'un flasque rapporté ayant un alésage de dimension telle qu'il assure l'étanchéité aux poussières par coopération avec un arbre.

Dans une variante, le bandage externe forme le chemin de roulement des rouleaux qui sont maintenus latéralement par des flasques rapportés eux-mêmes maintenus par clipage, collage ou soudage chacun dans un logement circulaire formé dans le bandage extérieur, les flasques ayant des alésages tels qu'ils assurent l'étanchéité du palier aux poussières.

D'autres caractéristiques et avantages de l'invention ressortiront mieux de la description qui va suivre de plusieurs modes de réalisation de palier à roulement obtenus par mise en oeuvre du procédé selon l'invention, faite en référence au dessin annexé sur lequel :

- la figure 1 est une coupe longitudinale d'un premier mode de réalisation de palier à roulement selon l'invention ;

- la figure 2 est une coupe longitudinale à plus petite échelle d'un palier à roulement étanche à la poussière par chicanes entre la bague intérieure et les parties latérales du bandage extérieur et du flasque ;

- la figure 3 est une coupe longitudinale d'un palier à roulement selon une variante de la figure 2, comportant une bague extérieure épaulée ;

- la figure 4 est une coupe longitudinale d'un palier à roulement dépourvu de bague intérieure, selon l'invention et destiné à être monté directement sur un axe ;

- la figure 5 est une coupe longitudinale d'un autre palier à roulement selon l'invention, sans bague intérieure, comportant deux flasques latéraux métalliques retenus par clipage et permettant d'encaisser des charges latérales ;

- la figure 6 est une coupe longitudinal d'un palier à roulement sans bagues extérieure et intérieure, comportant deux flasques latéraux retenus par clipage, ce palier étant destiné à être utilisé sous de faibles charges ;

- la figure 7 est une élévation d'une demi-plaque support de rouleaux ;

- la figure 8 est une élévation d'une variante de plaque support comportant une fente d'élasticité ; et

- la figure 9 est une élévation partielle d'une plaque support comportant une articulation entre deux éléments.

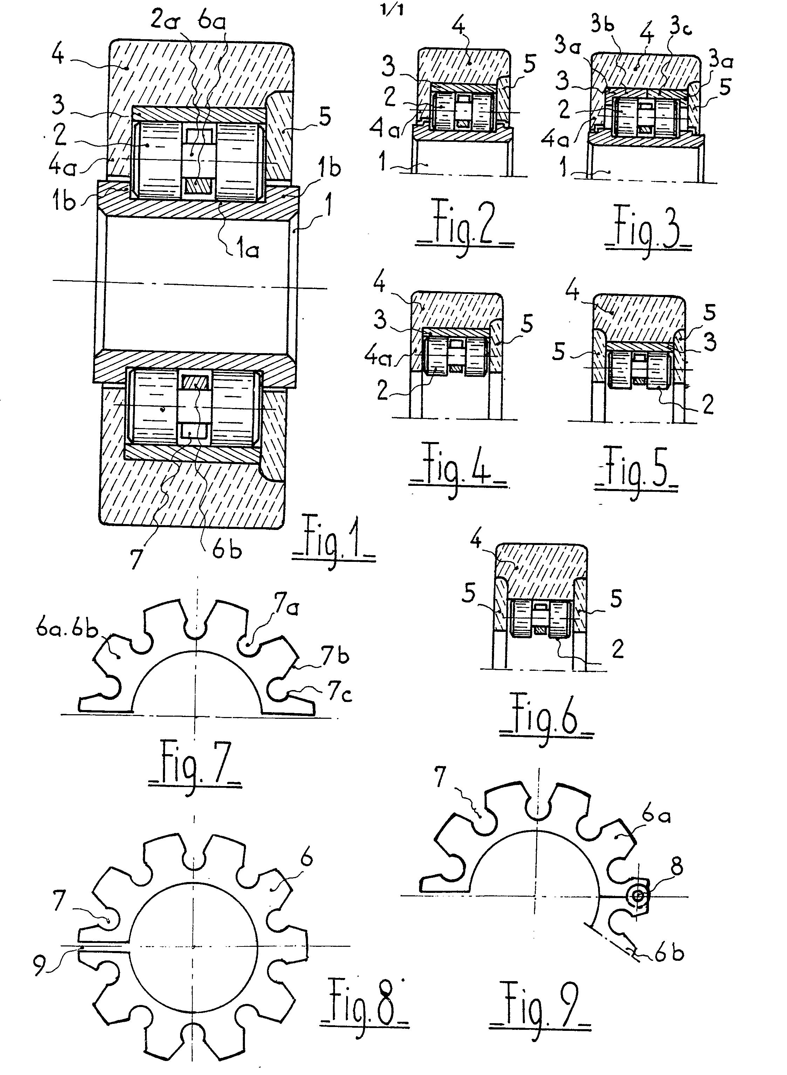

Tel que représenté en figure 1, le palier à roulement à rouleaux comporte une bague intérieure en acier traité 1 dont le chemin de roulement 1a des rouleaux 2 est limité en largeur par deux épaulements d'extrémité 1b, afin d'assurer un guidage latéral desdits rouleaux et éviter tout risque de déjantage. La bague extérieure 3 réalisée en acier traité a une largeur correspondant à celle des rouleaux, majorée des jeux fonctionnels longitudinaux :

cette bague est logée dans un bandage extérieur 4 réalisé en matière plastique injectée ; les pressions de contact exercées par ladite matière sur la face externe de la bague extérieure, éventuellement assorti d'un collage, assurent une liaison parfaite des deux pièces. Le bandage extérieur masque latéralement sur l'un des côtés la zone des rouleaux par un flasque incorporé 4a dont l'alésage correspond, au jeu fonctionnel près, au diamètre extérieur des épaulements 1b de la bague intérieure 1. De l'autre côté, cette zone est masquée à l'aide d'un flasque rapporté 5 en matière plastique injectée, clipé, collé ou soudé dans un logement circulaire épaulé exécuté dans le bandage extérieur 4. Les rouleaux cylindriques 2 comportent une gorge circulaire centrale 2a dans la largeur de laquelle s'inscrit l'épaisseur d'une plaque support circulaire 6 réalisant une cage en deux demi-parties 6a et 6b s'assemblant selon un plan diamétral. Sur chacune des deux demi-couronnes sont réparties à intervalles réguliers des encoches radiales 7 dont la découpure se compose d'un alésage 7a de périmètre supérieur à un demi-cercle en liaison avec le diamètre extérieur de la demi-couronne par l'intermédiaire d'un embrèvement 7b en forme de V, facilitant l'introduction du rouleau et son clipage dans l'alésage 7a, le passage à force dans l'étranglement 7c étant rendu possible par la nature même du matériau constituant la cage : ce matériau doit présenter, en plus des caractéristiques mécaniques exigées, une élasticité suffisante pour permettre cette possibilité de clipage ; à titre préférentiel la cage peut être réalisée dans une résine du type polyamide ou acétal. Le montage du palier à roulement selon l'invention s'effectue, entre autres opérations, par la mise en place autour de la bague intérieure des deux demi-cages 6a et 6b équipées de leurs rouleaux 2.

La figure 2 représente une variante de réalisation du palier à roulement dans laquelle les flasques incorporé 4a et rapporté 5 du bandage extérieur 4 comportent un alésage épaulé dont l'usinage se conjugue avec un épaulement exécuté sur chaque extrémité de la bague intérieure, de façon à réaliser une chicane assurant au palier une parfaite étanchéité à la poussière.

La figure 3 représente un palier à roulement identique à celui illustré en figure 2, et dans lequel la bague extérieure 3 en acier traité comporte à chacune de ses extrémités un épaulement 3a permettant au roulement d'encaisser des sollicitations axiales ; pour rendre possible la mise en place de cette bague extérieure elle est fractionnée en deux parties 3b et 3c dont le plan jointif se situe dans le plan de la cage support des rouleaux.

La figure 4 illustre une variante de réalisation du palier à roulement, dans laquelle il n'est pas fait usage d'une bague intérieure, le roulement des rouleaux 2 s'effectuant directement sur l'axe porteur.

A titre de variante de la version sans bague intérieure, ci-dessus décrite, le bandage extérieur 4 peut comporter deux logements circulaires épaulés destinés à recevoir chacun un flasque rapporté 5, tel que représenté en figure 5 ; une même disposition peut être adoptée dans la version illustrée en figure 6 dans laquelle le roulement des rouleaux s'effectue directement sur l'alésage du bandage extérieur 4, une telle disposition ne pouvant être appliquée que dans le cas où le palier n'est soumis qu'à de très faibles charges radiales.

Les paliers des modes de réalisation des figures 4 à 6 sont avantageusement montés dans une gorge épaulée formée dans un arbre et ayant une largeur correspondant à la longueur des rouleaux.

L'invention ne se limite aucunement aux modes de réalisation de ses différentes parties spécialement décrites, mais elle embrasse toutes les variantes possibles à condition que celles-ci ne soient pas en contradiction avec l'objet de chacune des revendications annexées à la présente description.

C'est ainsi que la plaque support de rouleaux peut être fractionnée en un plus grand nombre d'éléments et que ceux-ci peuvent être articulés entre eux autour d'un axe d'articulation 8 tel que représenté en figure 9, les éléments étant réunis dans la zone d'articulation par un assemblage dit "à mi-bois" par exemple. De même, et tel que représenté en figure 8 la plaque support de rouleaux peut être monobloc mais comporter une fente radiale d'élasticité 9, toutes ces variantes contribuant à permettre la mise en place de ladite plaque support équipée de rouleaux sur la bague intérieure du roulement.

L'invention s'applique à la fabrication et au montage de tous les types de paliers à roulement à rouleaux, destinés à fonctionner à faible ou moyenne vitesse sous des charges même élevées, tels que ceux équipant les galets ou rouleaux de manutention, galets de coulissement de baies, de portes de garage ou autres.

0029395

## REVENDICATIONS

1. Procédé de fabrication et de montage de paliers à rouleaux cylindriques pour charges radiales, ayant des rouleaux en acier traité, caractérisé en ce qu'il comprend la formation d'au moins une gorge circulaire dans chacun des rouleaux, la mise en place rapide et précise des rouleaux les uns par rapport aux autres par introduction de la gorge de chaque rouleau dans une encoche radiale d'une plaque support circulaire interrompue ou fractionnée en au moins deux parties sensiblement jointives, et le montage de la plaque portant les rouleaux dans un bandage extérieur ayant des flasques latéraux, rapportés ou non, assurant l'étanchéité aux poussières par rapport à une bague intérieure du palier ou à un arbre sur lequel le palier est monté.

2. Procédé selon la revendication 1, caractérisé en ce qu'il comprend,avant le montage de la plaque dans un bandage, l'introduction des rouleaux portés par la plaque support dans une gorge épaulée d'une bague intérieure ou d'un arbre, par écartement puis rapprochement de la plaque support interrompue ou fractionnée.

3. Palier à rouleaux cylindriques, obtenu par mise en oeuvre du procédé selon l'une des revendications 1 et 2, caractérisé en ce qu'il comprend des rouleaux cylindriques (2) en acier traité, ayant chacun au moins une gorge circulaire, une plaque (6) de support des rouleaux, formée d'une matière plastique semi-rigide, ayant des encoches radiales (7) réparties à intervalles réguliers et dont le profil comprend un alésage (7a) de diamètre supérieur à un demi-cercle et débouchant à la périphérie externe de la plaque par l'intermédiaire d'un embrèvement (7b) en forme de V, facilitant l'introduction du rouleau et son clipage dans ledit alésage, le passage à force dans l'étranglement séparant l'alésage de l'embrèvement étant rendu possible par l'élasticité de la matière plastique de la plaque, et un bandage externe (4) ayant des flasques latéraux, rapportés ou non, assurant l'étanchéité aux poussières par rapport à une bague intérieure du palier ou à un arbre sur lequel le palier est monté.

4.          Palier selon la revendication 3, caractérisé en ce qu'il comprend une bague intérieure (1) ayant des épaulements destinés à retenir les rouleaux, et la plaque (6) de support des rouleaux est réalisée sous forme d'une couronne monobloc comportant une fente radiale (9) d'élasticité permettant la mise en place entre les épaulements de la bague intérieure par déformation élastique de la plaque.

5.          Palier selon la revendication 3, caractérisé en ce qu'il comprend une bague intérieure (1) ayant des épaulements destinés à retenir les extrémités des rouleaux, et la plaque (6) de support des rouleaux est formée d'au moins deux éléments articulés autour d'un axe au moins (8) et permettant une ouverture suffisant à la mise en place de la plaque entre les épaulements de la bague intérieure.

6.          Palier selon la revendication 3, caractérisé en ce qu'il comporte une bague extérieure (3) et une bague intérieure (1), la bague extérieure étant logée dans un bandage (4) de matière plastique injectée, les pressions de contact exercées par la matière plastique sur la face externe de la bague extérieure, éventuellement accrues par collage, assurant une liaison parfaite des deux pièces, le bandage formant un flasque recouvrant l'extrémité des rouleaux, au niveau de l'une des faces latérales du bandage, l'alésage du flasque correspondant, au jeu fonctionnel près, au diamètre externe de la bague intérieure (1) ou de l'arbre sur lequel le palier est monté afin que le palier soit étanche aux poussières, l'autre face latérale du bandage (4) ayant un logement circulaire destiné à loger, par clipage, collage ou soudage, un flasque rapporté (5) dont l'alésage a un diamètre tel que le flasque assure l'étanchéité du palier aux poussières par coopération avec la bague intérieure ou l'arbre.

7.          Palier selon la revendication 6, caractérisé en ce que la bague extérieure est en acier, elle a des épaulements et elle est formée en deux parties adjacentes à un

**0029395**

plan radial sensiblement médian du roulement.

8.          Palier selon la revendication 3, caractérisé en ce que le bandage externe (4) a, dans chaque flanc, un logement circulaire destiné à la fixation, par clipage, collage ou soudage, d'un flasque rapporté (5) ayant un alésage de dimension telle qu'il assure l'étanchéité aux poussières par coopération avec un arbre.

9.          Palier selon la revendication 3, caractérisé en ce que le bandage externe (4) forme le chemin de roulement des rouleaux (2) maintenus latéralement par des flasques rapportés (5) maintenus par clipage, collage ou soudage chacun dans un logement circulaire formé dans le bandage extérieur, les flasques ayant des alésages tels qu'ils assurent l'étanchéité aux poussières du palier.

0029395

1/1

Fig.1

Fig.2

Fig.3

Fig.4

Fig.5

Fig.6

Fig.7

Fig.8

Fig.9